# FASCICULE DE BREVET EUROPEEN

(11) **EP 1 378 696 B1**
(45) Date de publication et mention de la délivrance du brevet: **15.01.2014**
(21) Numéro de dépôt: 03291542.3
(22) Date de dépôt: 24.06.2003
(51) Int. Cl.: F16L 11/12, F16L 11/08, B32B 1/08

(54) **Tuyaux flexibles en polyamide pour l' air comprime**
Polyamidschläuche für Druckluft
Hoses made of polyamide for compressed air

(30) Priorité: 01.07.2002 FR 0208185
(43) Date de publication de la demande: 07.01.2004
(73) Titulaire: ARKEMA FRANCE, 92700 Colombes (FR)
(72) Inventeur: Bellet Gaelle, 27000 Evreux (FR)
(74) Mandataire: Delprat, Corinne

(56) Documents cités:
- EP-A1- 1 036 968
- EP-A1- 1 162 061
- EP-A1- 1 314 758
- EP-B1- 0 730 115
- WO-A-00/77432
- DE-A1- 10 137 863
- FR-A3- 2 688 858
- US-A- 5 478 620
- US-A- 5 609 140
- US-A1- 2001 003 995
- US-A1- 2002 012 806
- US-B1- 6 177 162
- US-B1- 6 302 153
- US-B1- 6 435 217
- 'Druckluft Effizient: Compressed Air Facts', [Online] 31 October 2003, KARLSRUHE/GERMANY, pages 1 - 5, XP055014406 Retrieved from the Internet: <URL:http://www.druckluft-effizient.de/down loads/fakten/facts-00-09.pdf> [retrieved on 2011-12-09]
- Hellerich et al: "Werkstoff-Führer Kunststoffe", 31 December 2001 (2001-12-31), Hanser, München, Wien ISBN: 3-446-21437-2

## Description

### [Domaine de l'invention]

La présente invention concerne des tuyaux flexibles en polyamide pour l'air comprimé. Ils sont utiles pour distribuer l'air comprimé à des outillages, des machines outils, divers dispositifs et aussi pour les circuits de freinage des véhicules de grande puissance.

### [L'art antérieur et le problème technique]

Le brevet US 6066377 décrit des tuyaux flexibles pour les circuits de freinage. Ces flexibles sont constitués d'une couche intérieure (en contact avec l'air de freinage) et d'une couche extérieure en polyamide 11 ou 12 et entre ces couches il y a une ou deux couches de polyéthylène haute densité (HDPE) et éventuellement une tresse de renfort en polyester. Le HDPE doit être réticulé par irradiation pour que le tube ait une résistance mécanique en particulier à l'éclatement et il doit aussi contenir une polyoléfine fonctionnalisée pour créer une adhésion entre le polyamide et le HDPE. Les exemples ne sont pas reproductibles et conduisent à des résultats aléatoires. Les propriétés mécaniques du HDPE sont insuffisantes et fragilisent le tube.

La demande de brevet FR 2812928 décrit une tubulure stratifiée en polyamide pour frein à air formée de couches extérieure et intérieure de polyamide 11 ou 12, avec des couches intérieures en polyamide 6 contenant en poids 14% d'un plastifiant (butylbenzenesulfonamide), 7% de caprolactame résiduel, 10% d'élastomère EPDM greffé par l'anhydride maleique et 5% de polyéthylène greffé par l'anhydride maleique. Les couches de polyamide 6 et de polyamide 11 ou 12 sont collées ensemble par une couche de liaison. La couche de liaison est de préférence un polyamide 6-12 ou une polyoléfine modifiée par un anhydride. Le plastifiant et le caprolactame résiduel des couches de PA 6 exsudent et provoquent une délamination des couches et une rigidification des couches de PA 6. Le tuyau ne présente plus de propriétés mécaniques suffisantes. De plus le polyamide 6 a une reprise d'humidité beaucoup plus importante que celle du PA 11 ou du PA 12 et donc ses propriétés mécaniques chutent fortement.

Le document FR2688858 décrit l'utilisation d'un tuyau flexible multicouche, ledit tuyau comprenant une couche intérieure choisie parmi les polyamides, une couche extérieure en polyamide choisi parmi le PA11 et le PA12 et une couche de liant disposée entre la couche intérieure et la couche extérieure.

Le document US2002/0012806 décrit un tuyau flexible multicouche comprenant une couche intérieure en polyamide choisi parmi les polyamides aliphatiques résultant de la condensation d'une diamine aliphatique ayant de 6 à 12 atomes de carbone et d'un diacide aliphatique ayant de 9 à 12 atomes de carbone, une couche extérieure en polyamide choisie parmi le PA11 et le PA12, une couche intermédiaire disposée entre la couche intérieure et la couche extérieure, et une couche de liant en copolyamide.

On a maintenant trouvé des flexibles à base de polyamide ne présentant pas les inconvénients ci dessus, constitués de plusieurs couches de polyamide et de mélanges à base de polyamide. Ils sont moins coûteux que les tuyaux monocouches en PA 11 ou PA 12 qui sont la référence tout en en ayant les propriétés.

### [Brève description de l'invention]

Selon une première forme la présente invention concerne l'utilisation d'un tuyau flexible multicouche pour l'air comprimé tel que définie dans la revendication 1, le tuyau comprenant
- une couche intérieure en contact avec l'air comprimé choisie parmi les polyamides, les mélanges de polyamide et de polyoléfine à matrice polyamide, les copolymères à blocs polyamide et blocs polyether, les mélanges de polyamides et de copolymères à blocs polyamide et blocs polyether,
- une couche extérieure en polyamide choisi parmi le PA 11, le PA 12, les polyamides aliphatiques résultant de la condensation d'une diamine aliphatique ayant de 6 à 12 atomes de carbone et d'un diacide aliphatique ayant de 9 à 12 atomes de carbone et les copolyamides 11/12 ayant soit plus de 90% de motifs 11 soit plus de 90% de motifs 12.

une couche de liant copolyamide étant disposée entre la couche intérieure et la couche extérieure.

Selon une variante de l'invention d'autres couches sont disposées entre la couche intérieure et la couche extérieure.

Selon une deuxième forme l'invention concerne un tuyau flexible multicouche pour l'air comprimé qui est défini dans la revendication 5 et qui comprend :
- une couche intérieure en contact avec l'air comprimé en polyamide choisi parmi le PA 11, le PA 12, les polyamides aliphatiques résultant de la condensation d'une diamine aliphatique ayant de 6 à 12 atomes de carbone et d'un diacide aliphatique ayant de 9 à 12 atomes de carbone et les copolyamides 11/12 ayant soit plus de 90% de motifs 11 soit plus de 90% de motifs 12,
- une couche extérieure en polyamide choisie parmi les mêmes produits que la couche intérieure et pouvant être identique ou différente,
- au moins une couche intermédiaire disposée entre la couche intérieure et la couche extérieure choisie parmi les mélanges de polyamide et de polyoléfine à matrice polyamide, les copolymères à blocs polyamide et blocs polyether, les mélanges de polyamides et de copolymères à blocs polyamide et blocs polyether, et
- une couche de liant en copolyamide disposée entre la couche intérieure et la couche intermédiaire.

Selon une variante de l'invention une tresse de renfort est disposée entre la couche intérieure et la couche extérieure.

### [Description détaillée de l'invention]

**S'agissant de la couche intérieure et d'abord des polyamides** on entend par polyamide les produits de condensation :
- d'un ou plusieurs aminoacides, tels les acides aminocaproïques, amino-7-heptanoïque, amino-11-undécanoïque et amino-12-dodécanoïque ou d'un ou plusieurs lactames tels que caprolactame, oenantholactame et lauryllactame ;
- d'un ou plusieurs sels ou mélanges de diamines telles l'hexaméthylènediamine, la dodécaméthylènediamine, la métaxylyènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique.

A titre d'exemple de polyamide on peut citer le PA 6, le PA 6-6 le PA 11 et le PA 12.

On peut aussi utiliser avantageusement des copolyamides. On peut citer les copolyamides résultant de la condensation d'au moins deux acides alpha oméga aminocarboxyliques ou de deux lactames ou d'un lactame et d'un acide alpha oméga aminocarboxylique. On peut encore citer les copolyamides résultant de la condensation d'au moins un acide alpha oméga aminocarboxylique (ou un lactame), au moins une diamine et au moins un acide dicarboxylique.

A titre d'exemple de lactames on peut citer ceux ayant de 3 à 12 atomes de carbone sur le cycle principal et pouvant être substitués. On peut citer par exemple le β,β-diméthylpropriolactame, le α,α-diméthylpropriolactame, l'amylolactame, le caprolactame, le capryllactame et le lauryllactame.

A titre d'exemple d'acide alpha oméga aminocarboxylique on peut citer l'acide amino-undécanoïque et l'acide aminododécanoïque. A titre d'exemple d'acide dicarboxylique on peut citer l'acide adipique, l'acide sébacique, l'acide isophtalique, l'acide butanedioïque, l'acide 1,4 cyclohexyldicarboxylique, l'acide téréphtalique, le sel de sodium ou de lithium de l'acide sulphoisophtalique, les acides gras dimérisés(ces acides gras dimérisés ont une teneur en dimère d'au moins 98% et sont de préférence hydrogénés) et l'acide dodécanédioïque HOOC-(CH₂)₁₀-COOH.

La diamine peut être une diamine aliphatique ayant de 6 à 12 atomes de carbone, elle peut être arylique et/ou cyclique saturée. A titre d'exemples on peut citer l'hexaméthylènediamine, la pipérazine, la tetraméthylène diamine, l'octaméthylène diamine, la décaméthylène diamine, la dodécaméthylène diamine, le 1,5 diaminohexane, le 2,2,4-triméthyl-1,6-diamino-hexane, les polyols diamine, l'isophorone diamine (IPD), le méthyl pentaméthylènediamine (MPDM), la bis(aminocyclohéxyl) méthane (BACM), la bis(3-méthyl-4 aminocyclohéxyl) méthane (BMACM).

A titre d'exemples de copolyamides on peut citer des copolymères de caprolactame et de lauryl lactame (PA 6/12), des copolymères de caprolactame, d'acide adipique et d'hexaméthylène diamine (PA 6/6-6), des copolymères de caprolactame, de lauryle lactame, d'acide adipique et d'hexaméthylène diamine (PA 6/12/6-6), des copolymères de caprolactame, de lauryle lactame, d'acide amino 11 undécanoïque, d'acide azélaïque et d'hexaméthylène diamine (PA 6/6-9/11/12), des copolymères de caprolactame, de lauryle lactame, d'acide amino 11 undécanoïque, d'acide adipique et d'hexaméthylène diamine (PA 6/6-6/11/12), des copolymères de lauryle lactame, d'acide azélaïque et d'hexaméthylène diamine (PA 6-9/12).

Avantageusement le copolyamide est choisi parmi le PA 6 /12 et le PA 6 / 6-6.

On peut utiliser des mélanges de polyamide. Avantageusement la viscosité relative des polyamides, mesurée en solution à 1% dans l'acide sulfurique à 20°C, est comprise entre 1,5 et 5.

**S'agissant de la couche intérieure et des copolymères à blocs polyamides et blocs polyéthers** ils résultent de la copolycondensation de séquences polyamides à extrémités réactives avec des séquences polyéthers à extrémités réactives, telles que, entre autres :
1) Séquences polyamides à bouts de chaîne diamines avec des séquences polyoxyalkylènes à bouts de chaînes dicarboxyliques.
2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatique appelées polyétherdiols.
3) Séquences polyamides à bouts de chaînes dicarboxyliques avec des polyétherdiols, les produits obtenus étant, dans ce cas particulier, des polyétheresteramides. On utilise avantageusement ces copolymères.

Les séquences polyamides à bouts de chaînes dicarboxyliques proviennent, par exemple, de la condensation d'acides alpha-oméga aminocarboxyliques, de lactames ou de diacides carboxyliques et diamines en présence d'un diacide carboxylique limiteur de chaîne.

Le polyéther peut être par exemple un polyéthylène glycol (PEG), un polypropylène glycol (PPG) ou un polytétra méthylène glycol (PTMG). Ce dernier est aussi appelé polytétrahydrofurane (PTHF).

La masse molaire en nombre *M̅n̅* des séquences polyamides est comprise entre 300 et 15 000 et de préférence entre 600 et 5 000. La masse *M̅n̅* des séquences polyéther est comprise entre 100 et 6 000 et de préférence entre 200 et 3 000.

Les polymères à blocs polyamides et blocs polyéthers peuvent aussi comprendre des motifs répartis de façon aléatoire. Ces polymères peuvent être préparés par la réaction simultanée du polyéther et des précurseurs des blocs polyamides.

Par exemple, on peut faire réagir du polyétherdiol, un lactame (ou un alpha-oméga amino acide) et un diacide limiteur de chaîne en présence d'un peu d'eau. On obtient un polymère ayant essentiellement des blocs polyéthers, des blocs polyamides de longueur très variable, mais aussi les différents réactifs ayant réagi de façon aléatoire qui sont répartis de façon statistique le long de la chaîne polymère.

Ces polymères à blocs polyamides et blocs polyéthers qu'ils proviennent de la copolycondensation de séquences polyamides et polyéthers préparées auparavant ou d'une réaction en une étape présentent, par exemple, des duretés shore D pouvant être comprises entre 20 et 75 et avantageusement entre 30 et 70 et une viscosité inherente entre 0,8 et 2,5 mesurée dans le métacrésol à 25°C pour une concentration initiale de 0,8 g/100 ml. Les MFI peuvent être compris entre 5 et 50 (235°C sous une charge de 1 kg)

Les blocs polyétherdiols sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. Ils peuvent être aussi mélangés avec des précurseurs de polyamide et un limiteur de chaîne pour faire les polymères à blocs polyamides et blocs polyéthers ayant des motifs répartis de façon statistique.

Des polymères à blocs polyamides et polyéthers sont décrits dans les brevets US 4 331 786, US 4 115 475, US 4 195 015, US 4 839 441, US 4 864 014, US 4 230 838 et US 4 332 920.

Le rapport de la quantité de copolymère à blocs polyamide et blocs polyether sur la quantité de polyamide est, en poids, compris avantageusement entre 10/90 et 60/40.

**S'agissant de la couche intérieure et des mélanges de polyamide et de copolymères à blocs polyamide et blocs polyether** ceci revient à remplacer une partie du polyamide par un copolymère à blocs polyamide et blocs polyether, c'est à dire en utilisant un mélange comprenant au moins un des polyamides précédents et au moins un copolymère à blocs polyamide et blocs polyether. Les copolymères à blocs polyamide et blocs polyether sont définis ci dessus. On peut citer par exemple les mélanges de (i) PA 6 et (ii) copolymère à blocs PA 6 et blocs PTMG, des mélanges de (i) PA 6 et (ii) copolymère à blocs PA 12 et blocs PTMG et des mélanges de (i) PA 12 et (ii) copolymère à blocs PA 6 ou PA 12 et blocs PTMG.

**Quant à la polyoléfine du mélange de polyamide et de polyoléfine** elle peut être fonctionnalisée ou non fonctionnalisée ou être un mélange d'au moins une fonctionnalisée et/ou d'au moins une non fonctionnalisée. Pour simplifier on adésigné la polyoléfine par (B) et on a décrit ci dessous des polyoléfines fonctionnalisées (B1) et des polyoléfines non fonctionnalisées (B2).

Une polyoléfine non fonctionnalisée (B2) est classiquement un homo polymère ou copolymère d'alpha oléfines ou de dioléfines, telles que par exemple, éthylène, propylène, butène-1, octène-1, butadiène. A titre d'exemple, on peut citer :
- les homo polymères et copolymères du polyéthylène, en particulier LDPE, HDPE, LLDPE(linear low density polyéthylène, ou polyéthylène basse densité linéaire), VLDPE(very low density polyéthylène, ou polyéthylène très basse densité) et le polyéthylène métallocène .
- les homopolymères ou copolymères du propylène.
- les copolymères éthylène/alpha-oléfine tels qu'éthylène/propylène, les EPR(abréviation d'éthylène-propylene-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- les copolymères de l'éthylène avec au moins un produit choisi parmi les sels ou les esters d'acides carboxyliques insaturés tel que le (méth)acrylate d'alkyle (par exemple acrylate de méthyle), ou les esters vinyliques d'acides carboxyliques saturés tel que l'acétate de vinyle (EVA), la proportion de comonomère pouvant atteindre 40% en poids.

La polyoléfine fonctionnalisée (B1) peut être un polymère d'alpha oléfines ayant des motifs réactifs (les fonctionnalités) ; de tels motifs réactifs sont les fonctions acides, anhydrides, ou époxy. À titre d'exemple, on peut citer les polyoléfines précédentes (B2) greffées ou co- ou ter polymérisées par des époxydes insaturés tels que le (méth)acrylate de glycidyle, ou par des acides carboxyliques ou les sels ou esters correspondants tels que l'acide (méth)acrylique (celui-ci pouvant être neutralisé totalement ou partiellement par des métaux tels que Zn, etc.) ou encore par des anhydrides d'acides carboxyliques tels que l'anhydride maléique. Une polyoléfine fonctionnalisée est par exemple un mélange PE/EPR, dont le ratio en poids peut varier dans de larges mesures, par exemple entre 40/60 et 90/10, ledit mélange étant co-greffé avec un anhydride, notamment anhydride maléique, selon un taux de greffage par exemple de 0,01 à 5% en poids.

La polyoléfine fonctionnalisée (B1) peut être choisie parmi les (co)polymères suivants, greffés avec anhydride maléique ou méthacrylate de glycidyle, dans lesquels le taux de greffage est par exemple de 0,01 à 5% en poids :
- du PE, du PP, des copolymères de l'éthylène avec propylène, butène, hexène, ou octène contenant par exemple de 35 à 80% en poids d'éthylène ;
- les copolymères éthylène/alpha-oléfine tels qu'éthylène/propylène, les EPR(abréviation d'éthylène-propylene-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- des copolymères éthylène et acétate de vinyle (EVA), contenant jusqu'à 40% en poids d'acétate de vinyle ;
- des copolymères éthylène et (méth)acrylate d'alkyle, contenant jusqu'à 40% en poids de (méth)acrylate d'alkyle ;
- des copolymères éthylène et acétate de vinyle (EVA) et (méth)acrylate d'alkyle, contenant jusqu'à 40% en poids de comonomères .

La polyoléfine fonctionnalisée (B1) peut être aussi choisie parmi les copolymères éthylène/propylène majoritaires en propylène greffés par de l'anhydride maléique puis condensés avec du polyamide (ou un oligomère de polyamide) mono aminé (produits décrits dans EP-A-0342066).

La polyoléfine fonctionnalisée (B1) peut aussi être un co- ou ter polymère d'au moins les motifs suivants : (1) éthylène, (2) (méth)acrylate d'alkyle ou ester vinylique d'acide carboxylique saturé et (3) anhydride tel que anhydride maléique ou acide (méth)acrylique ou époxy tel que (méth)acrylate de glycidyle. A titre d'exemple de polyoléfines fonctionnalisées de ce dernier type, on peut citer les copolymères suivants, où l'éthylène représente de préférence au moins 60% en poids et où le ter monomère (la fonction) représente par exemple de 0,1 à 10% en poids du copolymère ;
- les copolymères éthylène/(méth)acrylate d'alkyle / acide (méth)acrylique ou anhydride maléique ou méthacrylate de glycidyle;
- les copolymères éthylène/acétate de vinyle/anhydride maléique ou méthacrylate de glycidyle ;
- les copolymères éthylène/acétate de vinyle ou (méth)acrylate d'alkyle / acide (méth)acrylique ou anhydride maléique ou méthacrylate de glycidyle.

Dans les copolymères qui précèdent, l'acide (méth)acrylique peut être salifié avec Zn ou Li.

Le terme "(méth)acrylate d'alkyle" dans (B1) ou (B2) désigne les méthacrylates et les acrylates d'alkyle en C1 à C8, et peut être choisi parmi l'acrylate de méthyle, l'acrylate d'éthyle, l'acrylate de n-butyle, l'acrylate d'iso butyle, l'acrylate d'éthyl-2-hexyle, l'acrylate de cyclohexyle, le méthacrylate de méthyle et le méthacrylate d'éthyle.

Par ailleurs, les polyoléfines précitées (B1) peuvent aussi être réticulées par tout procédé ou agent approprié (diépoxy, diacide, peroxyde, etc.) ; le terme polyoléfine fonctionnalisée comprend aussi les mélanges des polyoléfines précitées avec un réactif difonctionnel tel que diacide, dianhydride, diépoxy, etc. susceptible de réagir avec celles-ci ou les mélanges d'au moins deux polyoléfines fonctionnalisées pouvant réagir entre elles.

Les copolymères mentionnés ci-dessus, (B1) et (B2), peuvent être copolymérisés de façon statistique ou séquencée et présenter une structure linéaire ou ramifiée.

Le poids moléculaire, l'indice MFI, la densité de ces polyoléfines peuvent aussi varier dans un large mesure, ce que l'homme de l'art appréciera. MFI, abréviation de Melt Flow Index, est l'indice de fluidité à l'état fondu. On le mesure selon la norme ASTM 1238.

Avantageusement les polyoléfines (B2) non fonctionnalisées sont choisies parmi les homopolymères ou copolymères du polypropylène et tout homo polymère de l'éthylène ou copolymère de l'éthylène et d'un comonomère de type alpha oléfinique supérieur tel que le butène, l'hexène, l'octène ou le 4-méthyl 1-Pentène. On peut citer par exemple les PP, les PE de haute densité, PE de moyenne densité, PE basse densité linéaire, PE basse densité, PE de très basse densité. Ces polyéthylènes sont connus par l'Homme de l'Art comme étant produits selon un procédé « radicalaire », selon une catalyse de type « Ziegler » ou, plus récemment, selon une catalyse dite « métallocène ».

Avantageusement les polyoléfines fonctionnalisées (B1) sont choisies parmi tout polymère comprenant des motifs alpha oléfiniques et des motifs porteurs de fonctions réactives polaires comme les fonctions époxy, acide carboxylique ou anhydride d'acide carboxylique. A titre d'exemples de tels polymères, on peut citer les ter polymères de l'éthylène, d'acrylate d'alkyle et d'anhydride maléique ou de méthacrylate de glycidyle comme les Lotader® de la Demanderesse ou des polyoléfines greffées par de l'anhydride maléique comme les Orevac® de la Demanderesse ainsi que des ter polymères de l'éthylène, d'acrylate d'alkyle et d'acide (meth) acrylique. On peut citer aussi les homopolymères ou copolymères du polypropylène greffés par un anhydride d'acide carboxylique puis condensés avec des polyamides ou des oligomères mono aminés de polyamide.

Le MFI du polyamide, les MFI de (B1) et (B2) peuvent être choisis dans une large plage il est cependant recommandé pour faciliter la dispersion de (B) que le MFI du polyamide soit plus grand que celui de (B).

Pour de faibles proportions de (B), par exemple 10 à 15 parties, il est suffisant d'utiliser une polyoléfine (B2) non fonctionnalisée. La proportion de (B2) et (B1) dans la phase (B) dépend de la quantité de fonctions présentes dans (B1) ainsi que de leur réactivité. Avantageusement on utilise des rapports en poids (B1)/(B2) allant de 5/35 à 15/25. On peut aussi n'utiliser qu'un mélange de polyoléfines (B1) pour obtenir une réticulation.

**Selon une première forme préférée du mélange de polyamide et de polyoléfine** la polyoléfine (B) comprend (i) un polyéthylène haute densité (HDPE) et (ii) un mélange d'un polyéthylène (C1) et d'un polymère (C2) choisi parmi les élastomères, les polyéthylènes de très basse densité et les copolymères de l'éthylène, le mélange (C1 ) + (C2) étant cogreffé par un acide carboxylique insaturé.

Selon une variante de cette première forme la polyoléfine (B) comprend (i) un polyéthylène haute densité (HDPE), (ii) un polymère (C2) choisi parmi les élastomères, les polyéthylènes de très basse densité et les copolymères de l'éthylène (C2) étant greffé par un acide carboxylique insaturé et (iii) un polymère (C'2) choisi parmi les élastomères, les polyéthylènes de très basse densité et les copolymères de l'éthylène.

**Selon une deuxième forme préférée du mélange de polyamide et de polyoléfine** la polyoléfine (B) comprend (i) du polypropylène et (ii) une polyoléfine qui résulte de la réaction d'un polyamide (C4) avec un copolymère (C3) comprenant du propylène et un monomère insaturé X, greffé ou copolymérisé.

**Selon une troisième forme préférée du mélange de polyamide et de polyoléfine** la polyoléfine (B) comprend (i) un polyéthylène de type EVA, LLDPE , VLDPE ou metallocene et (ii) un copolymère éthylène -(meth)acrylate d'alkyle -anhydride maléique.

**Selon une quatrième forme préférée du mélange de polyamide et de polyoléfine** la polyoléfine comprend deux polymères fonctionnalisés comprenant au moins 50 % en moles de motifs éthylène et pouvant réagir pour former une phase réticulée. Selon une variante le polyamide (A) est choisi parmi les mélanges de (i) polyamide et (ii) copolymère à blocs PA 6 et blocs PTMG et les mélanges de (i) polyamide et (ii) copolymère à blocs PA 12 et blocs PTMG; le rapport des quantités de copolymère et de polyamide en poids étant compris entre 10/90 et 60/40.

**S'agissant de la première forme** les proportions sont avantageusement les suivantes (en poids) :
60 à 70 % de polyamide,
5 à 15 % du mélange de (C1 ) et (C2) cogreffé
le complément en polyéthylène haute densité .
S'agissant du polyéthylène haute densité sa densité est avantageusement comprise entre 0,940 et 0,965 et le MFI entre 0.1 et 5 g/10 min. ( 190°C 2,16 kg).

Le polyéthylène (C1 ) peut être choisi parmi les polyéthylènes cités plus haut. Avantageusement (C1) est un polyéthylène haute densité (HDPE) de densité comprise entre 0,940 à 0,965. Le MFI de (C1) est (sous 2,16 kg - 190°C) entre 0,1 et 3 g/10 min.

Le copolymère (C2) peut être par exemple un élastomère éthylène / propylène (EPR) ou éthylène / propylène / diène (EPDM). (C2) peut être aussi un polyéthylène de très basse densité (VLDPE) qui est soit un homopolymère de l'éthylène, soit un copolymère de l'éthylène et d'une alpha oléfine. (C2) peut aussi être un copolymère de l'éthylène avec au moins un produit choisi parmi (i) les acides carboxyliques insaturés, leurs sels, leurs esters, (ii) les esters vinyliques d'acides carboxyliques saturés (iii) les acides dicarboxyliques insaturés, leurs sels, leurs esters, leurs hemiesters, leurs anhydrides. Avantageusement (C2) est un EPR.

Avantageusement on utilise 60 à 95 parties de (C1) pour 40 à 5 parties de (C2).

Le mélange de (C1) et (C2) est greffé avec un acide carboxylique insaturé c'est-à-dire (C1) et (C2) sont cogreffés. On ne sortirait pas du cadre de l'invention en utilisant un dérivé fonctionnel de cet acide. Des exemples d'acide carboxylique insaturés sont ceux ayant 2 à 20 atomes de carbone tels que les acides acrylique, méthacrylique, maléique, fumarique et itaconique. Les dérivés fonctionnels de ces acides comprennent par exemple les anhydrides, les dérivés esters, les dérivés amides, les dérivés imides et les sels métalliques (tels que les sels de métaux alcalins) des acides carboxyliques insaturés.

Des acides dicarboxyliques insaturés ayant 4 à 10 atomes de carbone et leurs dérivés fonctionnels, particulièrement leurs anhydrides, sont des monomères de greffage particulièrement préférés. Ces monomères de greffage comprennent par exemple les acides maléique, fumarique, itaconique, citraconique, allylsuccinique, cyclohex-4-ène-1,2-dicarboxylique, 4-méthylcyclohex-4-ène-1,2-dicarboxylique, bicyclo(2,2,1)-hept-5-ène-2,3-dicarboxylique, x-méthylbicyclo(2,2,1)-hept-5-ène-2,3-dicarboxylique, les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique, et x-méthylbicyclo(2,2,1)hept-5-ène-2,2-dicarboxylique. On utilise avantageusement l'anhydride maléique.

Divers procédés connus peuvent être utilisés pour greffer un monomère de greffage sur le mélange de (C1) et (C2). Par exemple, ceci peut être réalisé en chauffant les polymères (C1) et (C2) à température élevée, environ 150° à environ 300°C, en présence ou en l'absence d'un solvant avec ou sans générateur de radicaux.

Dans le mélange de (C1) et (C2) modifié par greffage obtenu de la façon susmentionnée, la quantité du monomère de greffage peut être choisie d'une façon appropriée mais elle est de préférence de 0,01 à 10 %, mieux de 600 ppm à 2 % par rapport au poids de (C1) et (C2) greffés. La quantité du monomère greffé est déterminée par dosage des fonctions succiniques par spectroscopie IRTF. Le MFI de (C1) et (C2) ayant été cogreffés est de 5 à 30 g/ 10 min. (190°C - 2,16 kg) de préférence 13 à 20.

Avantageusement le mélange de (C1) et (C2) cogreffés, est tel que le rapport MFl₁₀ / MFI₂ est supérieur à 18,5, MFl₁₀ désignant l'indice d'écoulement à 190°C sous une charge de 10 kg et MFl₂ l'indice sous une charge de 2,16 kg. Avantageusement le MFI₂₀ du mélange des polymères (C1) et (C2) cogreffés est inférieur à 24. MFl₂₀ désigne l'indice d'écoulement à 190°C sous une charge de 21,6 kg.

S'agissant de la variante de la première forme les proportions sont avantageusement les suivantes (en poids) :
60 à 70 % de polyamide,
5 à 10 % de (C2) greffé,
5 à 10%de(C'2)
le complément en polyéthylène haute densité .
(C2) est avantageusement un EPR ou un EPDM, (C'2) est avantageusement un EPR contenant en poids 70 à 75% d'éthylène.

**S'agissant de la deuxième forme** les proportions sont avantageusement les suivantes (en poids) :
60 à 70 % de polyamide,
20 à 30 % de polypropylène
3 à 10 % d'une polyoléfine qui résulte de la réaction d'un polyamide (C4) avec un copolymère (C3) comprenant du propylène et un monomère insaturé X, greffé ou copolymérisé.

Le MFI du polypropylène est avantageusement inférieur à 0,5 g/10 min (230°C - 2,16 kg) et de préférence compris entre 0,1 et 0,5. De tels produits sont décrits dans EP 647681.

On décrit maintenant le produit greffé de cette deuxième forme. On commence par préparer (C3) qui est soit un copolymère du propylène et d'un monomère insaturé X, soit un polypropylène sur lequel on greffe un monomère insaturé X. X est tout monomère insaturé pouvant être copolymérisé avec le propylène ou greffé sur le polypropylène et possédant une fonction pouvant réagir avec un polyamide. Cette fonction peut être par exemple un acide carboxylique, un anhydride d'acide dicarboxylique ou un epoxyde. A titre d'exemple de monomère X on peut citer l'acide (méth)acrylique, l'anhydride maléique et les epoxydes insaturés tels que le (méth)acrylate de glycidyle. On utilise avantageusement l'anhydride maléique. S'agissant des polypropylènes greffés on peut greffer X sur des polypropylènes homo ou copolymères, tels que des copolymères éthylène propylène majoritaires en propylène (en moles). Avantageusement (C3) est tel que X est greffé. Le greffage est une opération connue en soi.

(C4) est un polyamide ou un oligomère de polyamide. Des oligomères de polyamide sont décrits dans EP 342066 et FR 2291225. Les polyamides (ou oligomères) (C4) sont les produits de condensation des monomères déjà cités plus haut. On peut utiliser des mélanges de polyamides. On utilise avantageusement le PA-6, le PA-11, le PA 12, le copolyamide à motifs 6 et motifs 12 (PA-6/12), et le copolyamide à base de caprolactame, hexaméthylènediamine et acide adipique (PA-6/6.6). Les polyamides ou oligomères (C4) peuvent être à terminaisons acides, amine ou monoamine. Pour que le polyamide ait une terminaison monoamine il suffit d'utiliser un limiteur de chaîne de formule 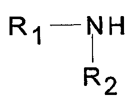 dans laquelle :
R₁ est l'hydrogène ou un groupement alkyle linéaire ou ramifié contenant jusqu'à 20 atomes de carbone,
R₂ est un groupement ayant jusqu'à 20 atomes de carbone alkyle ou alcenyle linéaire ou ramifié, un radical cycloaliphatique saturé ou non, un radical aromatique ou une combinaison des précédents. Le limiteur peut être par exemple la laurylamine ou l'oleylamine.

Avantageusement (C4) est un PA-6, un PA-11 ou un PA-12. La proportion de C4 dans C3 + C4 en poids est avantageusement comprise entre 0,1 et 60 %. La réaction de (C3) avec (C4) s'effectue de préférence à l'état fondu. On peut par exemple malaxer (C3) et (C4) dans une extrudeuse à une température généralement comprise entre 230 et 250°C. Le temps de séjour moyen de la matière fondue dans l'extrudeuse peut être compris entre 10 secondes et 3 minutes et de préférence entre 1 et 2 minutes.

**S'agissant de la troisième forme** les proportions sont avantageusement les suivantes (en poids) :
60 à 70 % de polyamide,
5 à 15 % d'un copolymère éthylène -(meth)acrylate d'alkyle -anhydride maléique.
le complément est un polyéthylène de type EVA, LLDPE , VLDPE ou metallocene; avantageusement la densité du polyéthylène LLDPE, VLDPE ou métallocene est comprise entre 0,870 et 0,925, et le MFI est compris entre 0,1 et 5 (190°C - 2.16 kg).

Avantageusement les copolymères éthylène - (méth)acrylate d'alkyle - anhydride maléique comprennent de 0,2 à 10 % en poids d'anhydride maléique, jusqu'à 40 % et de préférence 5 à 40 % en poids de (méth)acrylate d'alkyle. Leur MFI est compris entre 2 et 100 (190°C - 2,16 kg). Les (méth)acrylates d'alkyle ont déjà été décrits plus haut. La température de fusion est comprise entre 80 et 120°C. Ces copolymères sont disponibles dans le commerce. Ils sont produits par polymérisation radicalaire à une pression pouvant être comprise entre 200 et 2500 bars.

**S'agissant de la quatrième forme** les proportions sont avantageusement les suivantes (en poids) :
40 à 95 % de polyamide,
60 à 5 % d'un mélange d'un copolymère éthylène -(meth)acrylate d'alkyle -anhydride maléique et d'un copolymère éthylène -(meth)acrylate d'alkyle - methacrylate de glycidyle.

Avantageusement les copolymères éthylène - (méth)acrylate d'alkyle - anhydride maléique comprennent de 0,2 à 10 % en poids d'anhydride maléique, jusqu'à 40 % et de préférence 5 à 40 % en poids de (méth)acrylate d'alkyle. Leur MFI est compris entre 2 et 100 (190°C - 2,16 kg). Les (méth)acrylates d'alkyle ont déjà été décrits plus haut. La température de fusion est comprise entre 80 et 120°C. Ces copolymères sont disponibles dans le commerce. Ils sont produits par polymérisation radicalaire à une pression pouvant être comprise entre 200 et 2500 bars.

Le copolymère éthylène/(méth)acrylate d'alkyle/ methacrylate de glycidyle peut contenir jusqu'à 40% en poids de (méth)acrylate d'alkyle, avantageusement de 5 à 40 % et jusqu'à 10% en poids d'époxyde insaturé, de préférence 0,1 à 8%.

Avantageusement le (méth)acrylate d'alkyle est choisi parmi le (méth)acrylate de méthyle, l'acrylate d'éthyle, l'acrylate de n-butyle, l'acrylate d'isobutyle, l'acrylate de 2-éthylhexyle. La quantité de (méth)acrylate d'alkyle est de préférence de 20 à 35%. Le MFI est avantageusement compris entre 5 et 100 (en g/10 min à 190°C sous 2,16 kg), la température de fusion est comprise entre 60 et 110°C. Ce copolymère peut être obtenu par polymérisation radicalaire des monomères.

On peut ajouter des catalyseurs pour accélérer la réaction entre les fonctions époxy et anhydride, parmi les composés capables d'accélérer la réaction entre la fonction epoxy et la fonction anhydride on peut citer notamment :
- des aminés tertiaires telles que la diméthyllaurylamine, la diméthylstéarylamine, la N-butylmorpholine, la N,N-diméthylcyclohexylamine, la benzyldiméthylamine, la pyridine, la diméthylamino-4-pyridine, le méthyl-l-imidazole, la tétraméthyléthylhydrazine, la N,N-diméthylpipérazine, la N,N,N',N'-tétraméthyl-1,6-hexanediamine, un mélange d'amines tertiaires ayant de 16 à 18 carbones et connues sous l'appellation de diméthylsuifamine,
- des phosphines tertiaires telles que la triphénylphosphine
- des alkyldithiocarbamates de zinc.
- des acides.
On ne sortirait pas du cadre de l'invention si une partie du copolymère éthylène(meth)acrylate d'alkyle-anhydride maleique est remplacée par un copolymère éthylène-acide acrylique ou un copolymère éthylène -anhydride maleique l'anhydride maleique ayant été en tout ou partie hydrolysé. Ces copolymères peuvent aussi comprendre un (meth)acrylate d'alkyle. cette partie peut représenter jusqu'à 30% du copolymère éthylène-(meth)acrylate d'alkyleanhydride maleique.

**Selon la première forme de l'invention le matériau de la couche intérieure** est choisi parmi les polyamides, les mélanges de polyamide et de polyoléfine à matrice polyamide, les copolymères à blocs polyamide et blocs polyether, les mélanges de polyamides et de copolymères à blocs polyamide et blocs polyether.

De préférence dans les mélanges de polyamide et de polyoléfine à matrice polyamide le polyamide est choisi parmi le PA 6.

**S'agissant de la couche extérieure** les polyamides ont avantageusement une masse moléculaire moyenne en nombre *M̅n̅* en général supérieure ou égale à 12000 et avantageusement comprise entre 15000 et 50000. Leur masse moléculaire moyenne en poids *M̅w̅* est en général supérieure à 24000 et avantageusement comprise entre 30000 et 100000. Leur viscosité inhérente (mesurée à 20°C pour un échantillon de 5.10-3 g par cm3 de méta-crésol) est en général supérieure à 0,9.

A titre d'exemple de polyamides aliphatiques résultant de la condensation d'une diamine aliphatique ayant de 6 à 12 atomes de carbone et d'un diacide aliphatique ayant de 9 à 12 atomes de carbone on peut citer :
le PA 6-12 résultant de la condensation de l'hexaméthylène diamine et de l'acide 1,12-dodecanedioïque,
le PA 9-12 résultant de la condensation de la diamine en C9 et de l'acide 1,12-dodecanedioïque,
le PA 10-10 résultant de la condensation de la diamine en C10 et de l'acide 1,10-decanedioïque,
le PA 10-12 résultant de la condensation de la diamine en C10 et de l'acide 1,12-dodecanedioïque.

Quant aux copolyamides 11/12 ayant soit plus de 90% de motifs 11 soit plus de 90% de motifs 12, ils résultent de la condensation de l'acide amino 1-undecanoïque avec le lauryllactame (ou l'alpha oméga amino acide en C12).

Avantageusement le polyamide contient un catalyseur organique ou minéral qu'on a ajouté au cours de la polycondensation. De préférence c'est de l'acide phosphorique ou hypophosphorique. La quantité de catalyseur peut être jusqu'à 3000 ppm par rapport à la quantité de polyamide et avantageusement entre 50 et 1000 ppm.

On ne sortirait pas du cadre de l'invention en utilisant un mélange de polyamides.

Avantageusement le polyamide est le PA 11 ou le PA 12.

Le polyamide peut être plastifié. S'agissant du plastifiant il est choisi parmi les dérivés de benzène sulfonamide, tels que le n-butyl benzène sulfonamide (BBSA), l'éthyl toluène sulfonamide ou le N-cyclohexyl toluène sulfonamide; les esters d'acides hydroxy-benzoïques, tels que le parahydroxybenzoate d'éthyl-2 hexyle et le parahydroxybenzoate de décyl-2 hexyle ; les esters ou éthers du tétrahydrofurfuryl alcool, comme l'oligoéthylèneoxytétrahydrofurfurylalcool ; et les esters de l'acide citrique ou de l'acide hydroxy-malonique, tels que l'oligoéthylèneoxy malonate. Un plastifiant particulièrement préféré est le n-butyl benzène sulfonamide (BBSA). On ne sortirait pas du cadre de l'invention en utilisant un mélange de plastifiants. Le plastifiant peut être introduit dans le polyamide pendant la polycondensation ou ultérieurement. La proportion de plastifiant peut être de 0 à 30 % en poids pour respectivement 100 à 70 % de polyamide et avantageusement 5 à 20%.

**S'agissant du liant** on désigne ainsi tout produit qui permet l'adhésion des couches. Selon un exemple qui n'appartient pas à l'invention, le liant peut être une polyoléfine fonctionnalisée portant une fonction acide carboxylique ou anhydride d'acide carboxylique. Elle peut être mélangée avec une polyoléfine non fonctionnalisée. Selon l'invention le liant est un copolyamide.
Pour simplifier on a décrit des polyoléfines fonctionnalisées (B1) et des polyoléfines non fonctionnalisées (B2).

**A titre de premier exemple de liant** on peut citer les mélanges comprenant :
- 5 à 30 parties d'un polymère (D) lui-même comprenant un mélange d'un polyéthylène (D1) de densité comprise entre 0,910 et 0,940 et d'un polymère (D2) choisi parmi les élastomères, les polyéthylènes de très basse densité et les polyéthylènes métallocènes, le mélange (D1) + (D2) étant cogreffé par un acide carboxylique insaturé,
- 95 à 70 parties d'un polyéthylène (E) de densité comprise entre 0,910 et 0,930,
- le mélange de (D) et (E) étant tel que :
   sa densité est comprise entre 0,910 et 0,930,
   la teneur en acide carboxylique insaturé greffé est comprise entre 30 et 10000 ppm,
   le MFI (ASTM D 1238 - 190°C - 2,16 kg) est compris entre 0,1 et 3 g /10 min Le MFI désigne l'indice d'écoulement à l'état fondu.

La densité du liant est avantageusement comprise entre 0,915 et 0,920. Avantageusement (D1) et (E) sont des LLDPE , de préférence ils ont le même comonomere. Ce comonomère peut être choisi parmi est le 1-héxène, le 1-octène et le 1-butène. L'acide carboxylique insaturé peut être remplacé par un anhydride d'acide carboxylique insaturé.

**A titre de deuxième exemple de liant** on peut citer les mélanges comprenant:
- 5 à 30 parties d'un polymère (F) lui-même comprenant un mélange d'un polyéthylène (F1) de densité comprise entre 0,935 et 0,980 et d'un polymère (F2) choisi parmi les élastomères, les polyéthylènes de très basse densité et les copolymères de l'éthylène, le mélange (F1) + (F2) étant cogreffé par un acide carboxylique insaturé,
- 95 à 70 parties d'un polyéthylène (G) de densité comprise entre 0,930 et 0,950,
- le mélange de (F) et (G) étant tel que ;
   - sa densité est comprise entre 0,930 et 0,950 et avantageusement entre 0,930 et 0,940,
   - la teneur en acide carboxylique insaturé greffé est comprise entre 30 et 10000 ppm,
   - le MFI (indice d'écoulement à l'état fondu) mesuré selon ASTM D 1238 à 190°C - 21,6 kg est compris entre 5 et 100.

L'acide carboxylique insaturé peut être remplacé par un anhydride d'acide carboxylique insaturé.

**A titre de troisième exemple de liant** on peut citer les mélanges constitués d'un polyéthylène de type HDPE, LLDPE, VLDPE ou LDPE, 5 à 35 % d'un polyéthylène métallocène greffé (par un acide carboxylique insaturé ou un anhydride d'acide carboxylique insaturé) et 0 à 35 % d'un élastomère, le total étant 100%.

**A titre de quatrième exemple de liant** on peut citer les mélanges comprenant :
- 5 à 35 parties d'un polymère (S) lui-même constitué d'un mélange de 80 à 20 parties d'un polyéthylène métallocène (S1) de densité comprise entre 0,865 et 0,915 et de 20 à 80 parties d'un polyéthylène LLDPE (S2) non métallocène, le mélange (S1) + (S2) étant cogreffé par un acide carboxylique insaturé,
- 95 à 65 parties d'un polyéthylène (T) choisi parmi les polyéthylènes homo ou copolymères et les élastomères,
- le mélange de (S) et (T) étant tel que :
   - la teneur en acide carboxylique insaturé greffé est comprise entre 30 et 100000 ppm,
   - le MFI (ASTM D 1238 - 190°C - 2,16 kg) est compris entre 0,1 et 10 g / 10 min. Le MFI désigne l'indice d'écoulement à l'état fondu et s'exprime en grammes par 10 minutes.

L'acide carboxylique insaturé peut être remplacé par un anhydride d'acide carboxylique insaturé.

**S'agissant du liant en copolyamide selon l'invention,** les copolyamides utilisables dans la présente invention ont une température de fusion (Norme DIN 53736B) comprise entre 60 et 200°C et leur viscosité relative en solution peut être comprise entre 1,3 et 2,2 (Norme DIN 53727, solvant m-crésol, concentration 0,5 g/100 ml, température 25°C, viscosimètre Ubbelohde). Leur rhéologie à l'état fondu est de préférence proche de celle des matériaux de la couche extérieure et de la couche intérieure.

Selon la première forme de l'invention, les copolyamides proviennent de la condensation d'acides alpha-oméga aminocarboxyliques de lactames ou de diacides carboxyliques et diamines.

**Selon un premier type** de la première forme de l'invention les copolyamides résultent de la condensation d'au moins deux acides alpha oméga aminocarboxyliques ou d'au moins deux lactames ayant de 6 à 12 atomes de carbone ou d'un lactame et d'un acide aminocarboxylique n'ayant pas le même nombre d'atomes de carbone en présence éventuelle d'un limiteur de chaîne pouvant être par exemple une monoamine ou une diamine ou un monoacide carboxylique ou un diacide carboxylique. Parmi les limiteurs de chaîne on peut citer notamment l'acide adipique, l'acide azélaïque, l'acide stéarique, la dodecanediamine. Les copolyamides de ce premier type peuvent comprendre aussi des motifs qui sont des restes de diamines et diacides carboxyliques.

A titre d'exemple d'acide dicarboxylique on peut citer l'acide adipique, l'acide nonanedioïque, l'acide sébacique et l'acide dodécanédioïque.

A titre d'exemple d'acide alpha oméga aminocarboxylique on peut citer l'acide aminocaproïque, l'acide aminoundécanoïque et l'acide aminododécanoïque.

A titre d'exemple de lactame on peut citer le caprolactame et le laurolactame (2-Azacyclotridécanone).

**Selon un deuxième type** de la première forme de l'invention les copolyamides résultent de la condensation d'au moins un acide alpha-oméga aminocarboxylique (ou un lactame), au moins une diamine et au moins un diacide carboxylique. L'acide alpha oméga aminocarboxylique, le lactame et le diacide carboxylique peuvent être choisis parmi ceux cités plus haut.

La diamine peut être une diamine aliphatique branchée, linéaire ou cyclique ou encore arylique.

A titre d'exemples on peut citer l'hexaméthylènediamine, la pipérazine, l'isophorone diamine (IPD), le méthyl pentaméthylènediamine (MPDM), la bis(aminocyclohéxyl) méthane (BACM), la bis(3-méthyl-4 aminocyclohéxyl) méthane (BMACM).

Les procédés de fabrication des copolyamides sont connus de l'art antérieur et ces copolyamides peuvent être fabriqués par polycondensation, par exemple en autoclave.

**Selon un troisième type de la première forme de l'invention les copolyamides** sont un mélange d'un copolyamide 6/12 riche en 6 et d'un copolyamide 6/12 riche en 12. S'agissant du mélange de copolyamides 6/12 l'un comprenant en poids plus de 6 que de 12 et l'autre plus de 12 que de 6, le copolyamide 6/12 résulte de la condensation du caprolactame avec le lauryllactame. Il est clair que "6" désigne les motifs dérivés du caprolactame et "12" désigne les motifs dérivés du lauryllactame. On ne sortirait pas du cadre de l'invention si le caprolactame était remplacé en tout ou partie par l'acide aminocaproïque, de même pour le lauryllactame qui peut être remplacé par l'acide aminododecanoïque. Ces copolyamides peuvent comprendre d'autres motifs pourvu que les rapports des proportions de 6 et de 12 soient respectées.

Avantageusement le copolyamide riche en 6 comprend 60 à 90% en poids de 6 pour respectivement 40 à 10% de 12.

Avantageusement le copolyamide riche en 12 comprend 60 à 90% en poids de 12 pour respectivement 40 à 10% de 6.

Quant aux proportions du copolyamide riche en 6 et du copolyamide riche en 12 elles peuvent être, en poids, de 40/60 à 60/40 et de préférence 50/50.

Ces mélanges de copolyamides peuvent aussi comprendre jusqu'à 30 parties en poids d'autres (co)polyamides ou de polyoléfines greffées pour 100 parties des copolyamides riches en 6 et riches en 12.

Ces copolyamides ont une température de fusion (Norme DIN 53736B) comprise entre 60 et 200°C et leur viscosité relative en solution peut être comprise entre 1,3 et 2,2 (Norme DIN 53727, solvant m-crésol, concentration 0,5 g/100 ml, température 25°C, viscosimètre Ubbelohde). Leur rhéologie à l'état fondu est de préférence proche de celle des matériaux des couches adjacentes. Ces produits se fabriquent par les techniques habituelles des polyamides. Des procédés sont décrits dans les brevets US 4424864, US 4483975, US 4774139, US 5459230, US 5489667, US 5750232 et US 5254641.

**S'agissant de la deuxième forme** de l'invention les couches intérieure et extérieure sont avantageusement en PA 11 ou en PA 12 et la couche intermédiaire est choisie parmi les formes avantageuses de la couche intérieure de la première forme de l'invention. Le liant en copolyamide dans cette deuxième forme peut être choisi parmi les liants en copolyamide décrits dans la première forme.

Le diamètre intérieur des tuyaux de la présente invention peut être compris entre 4 et 30 mm et avantageusement entre 5 et 25 mm. Leur épaisseur peut être comprise entre 0,5 et 5 mm.

Ces tuyaux sont fabriqués par coextrusion. Dans ceux qui contiennent une tresse de renfort elle est disposée après avoir extrudé les couches les pluis à l'intérieur puis au dessus de cette tresse on vient coexdtruder les autres couches par un dispositif dit "en tête d'équerre". On peut mettre pluisieurs couches intermédiaires, une ou plusieurs tresses. Toutes ces techniques sont connues en elles mêmes.

Les tuyaux de la présente invention ont une très bonne résistance résistance chimique de leur couche extérieure en particulier au chlorure de zinc. Ils ont aussi une très bonne tenue mécanique en particulier permettant leur raccordement à l'aide de connecteurs à griffes.

## Revendications

1. Utilisation d'un tuyau flexible multicouche pour distribuer l'air comprimé à des outillages, des machines-outils, divers dispositifs et pour les circuits de freinage des véhicules de grande puissance, ledit tuyau étant constitué de plusieurs couches de polyamide, et de mélanges à base de polyamide, et comprenant :
• une couche intérieure en contact avec l'air comprimé choisie parmi les polyamides, les mélanges de polyamide et de polyoléfine à matrice polyamide, les copolymères à blocs polyamide et blocs polyether, les mélanges de polyamides et de copolymères à blocs polyamide et blocs polyether,
• une couche extérieure en polyamide choisi parmi le PA 11, le PA 12, les polyamides aliphatiques résultant de la condensation d'une diamine aliphatique ayant de 6 à 12 atomes de carbone et d'un diacide aliphatique ayant de 9 à 12 atomes de carbone et les copolyamides 11/12 ayant soit plus de 90% de motifs 11 soit plus de 90% de motifs 12, et
• une couche de liant en copolyamide disposée entre la couche intérieure et la couche extérieure, provenant de la condensation d'acides alpha-oméga aminocarboxyliques de lactames ou de diacides carboxyliques et diamines choisis parmi :
○ les copolyamides résultant de la condensation d'au moins deux acides alpha oméga aminocarboxyliques ou d'au moins deux lactames ayant de 6 à 12 atomes de carbone ou d'un lactame et d'un acide aminocarboxylique n'ayant pas le même nombre d'atomes de carbone en présence éventuelle d'un limiteur de chaîne,
○ les copolyamides résultant de la condensation d'au moins un acide alpha-oméga aminocarboxylique ou un lactame, au moins une diamine et au moins un diacide carboxylique, et
○ les copolyamides qui sont un mélange d'un copolyamide 6/12 riche en 6 et d'un copolyamide 6/12 riche en 12.

2. Utilisation selon la revendication 1 dans laquelle d'autres couches sont disposées entre la couche intérieure et la couche extérieure.

3. Utilisation selon la revendication 1 ou 2 dans laquelle le matériau de la couche intérieure est choisi parmi les mélanges de polyamide et de polyoléfine à matrice polyamide, les copolymères à blocs polyamide et blocs polyether, les mélanges de polyamides et de copolymères à blocs polyamide et blocs polyether.

4. Utilisation selon l'une quelconque des revendications précédentes dans laquelle la couche extérieure est en PA 11 ou en PA 12.

5. Tuyau flexible multicouche pour l'air comprimé constitué de plusieurs couches de polyamide et de mélanges à base de polyamide, et comprenant :
- une couche intérieure en contact avec l'air comprimé en polyamide choisi parmi le PA 11, le PA 12, les polyamides aliphatiques résultant de la condensation d'une diamine aliphatique ayant de 6 à 12 atomes de carbone et d'un diacide aliphatique ayant de 9 à 12 atomes de carbone et les copolyamides 11/12 ayant soit plus de 90% de motifs 11 soit plus de 90% de motifs 12,
- une couche extérieure en polyamide choisi parmi le PA 11, le PA 12, les polyamides aliphatiques résultant de la condensation d'une diamine aliphatique ayant de 6 à 12 atomes de carbone et d'un diacide aliphatique ayant de 9 à 12 atomes de carbone et les copolyamides 11/12 ayant soit plus de 90% de motifs 11 soit plus de 90% de motifs 12,
- au moins une couche intermédiaire disposée entre la couche intérieure et la couche extérieure choisie parmi les mélanges de polyamide et de polyoléfine à matrice polyamide, les copolymères à blocs polyamide et blocs polyether, les mélanges de polyamides et de copolymères à blocs polyamide et blocs polyether, et
- au moins une couche de liant en copolyamide disposée entre la couche intérieure et la couche intermédiaire.

6. Tuyau selon la revendication 5 dans laquelle le matériau des couches intérieure et extérieure est choisi parmi le PA 11 et le PA 12.

7. Utilisation selon la revendication 3 ou tuyau selon la revendication 5 dans lequel, dans le mélange de polyamide et de polyoléfine à matrice polyamide, la polyoléfine comprend (i) un polyéthylène haute densité (HDPE) et (ii) un mélange d'un polyéthylène (C1) et d'un polymère (C2) choisi parmi les élastomères, les polyéthylènes de très basse densité et les copolymères de l'éthylène, le mélange (C1) + (C2) étant cogreffé par un acide carboxylique insaturé.

8. Utilisation selon la revendication 3 ou tuyau selon la revendication 5 dans lequel, dans le mélange de polyamide et de polyoléfine à matrice polyamide, la polyoléfine comprend (i) un polyéthylène haute densité (HDPE), (ii) un polymère (C2) choisi parmi les élastomères, les polyéthylènes de très basse densité et les copolymères de l'éthylène (C2) étant greffé par un acide carboxylique insaturé et (iii) un polymère (C'2) choisi parmi les élastomères, les polyéthylènes de très basse densité et les copolymères de l'éthylène.

9. Utilisation selon la revendication 3 ou tuyau selon la revendication 5 dans lequel, dans le mélange de polyamide et de polyoléfine à matrice polyamide, la polyoléfine comprend (i) du polypropylène et (ii) une polyoléfine qui résulte de la réaction d'un polyamide (C4) avec un copolymère (C3) comprenant du propylène et un monomère insaturé X, greffé ou copolymérisé.

10. Utilisation selon la revendication 3 ou tuyau selon la revendication 5 dans lequel, dans le mélange de polyamide et de polyoléfine à matrice polyamide, la polyoléfine comprend (i) un polyéthylène de type EVA, LLDPE , VLDPE ou metallocene et (ii) un copolymère éthylène -(meth)acrylate d'alkyle - anhydride maléique.

11. Utilisation selon la revendication 3 ou tuyau selon la revendication 5 dans lequel, dans le mélange de polyamide et de polyoléfine à matrice polyamide, la polyoléfine comprend deux polymères fonctionnalisés comprenant au moins 50 % en moles de motifs éthylène et pouvant réagir pour former une phase réticulée.

12. Utilisation selon la revendication 3 ou tuyau selon la revendication 5 dans lequel, dans le mélange de polyamide et de polyoléfine à matrice polyamide, le polyamide est choisi parmi les mélanges de (i) polyamide et (ii) copolymère à blocs PA 6 et blocs PTMG et les mélanges de (i) polyamide et (ii) copolymère à blocs PA 12 et blocs PTMG; le rapport des quantités de copolymère et de polyamide en poids étant compris entre 10/90 et 60/40.

13. Utilisation d'un tuyau flexible multicouche selon l'une quelconque des revendications 5 à 6 pour distribuer l'air comprimé à des outillages, des machines-outils, divers dispositifs et pour les circuits de freinage des véhicules de grande puissance.

## Patentansprüche

1. Verwendung eines Mehrschichtschlauchs zur Zufuhr von Druckluft zu Geräten, Werkzeugmaschinen, verschiedenen Vorrichtungen und für Bremskreise von Hochleistungsfahrzeugen, wobei der Schlauch aus mehreren Schichten aus Polyamid und Mischungen auf Basis von Polyamid besteht und Folgendes umfasst:
• eine mit der Druckluft in Berührung stehende Innenschicht, die aus Polyamiden, Mischungen von Polyamid und Polyolefin mit Polyamid-Matrix, Copolymeren mit Polyamidblöcken und Polyetherblöcken und Mischungen von Polyamiden und Copolymeren mit Polyamidblöcken und Polyetherblöcken ausgewählt ist,
• eine Außenschicht aus Polyamid, das aus PA 11, PA 12, aliphatischen Polyamiden, die sich aus der Kondensation eines aliphatischen Diamins mit 6 bis 12 Kohlenstoffatomen und einer aliphatischen Disäure mit 9 bis 12 Kohlenstoffatomen ergeben, und Copolyamiden 11/12 mit entweder mehr als 90% 11-Einheiten oder mehr als 90% 12-Einheiten ausgewählt ist, und
• eine zwischen der Innenschicht und der Außenschicht angeordnete Bindemittelschicht aus Copolyamid aus der Kondensation von alpha,omega-Aminocarbonsäuren, Lactamen oder Dicarbonsäuren und Diaminen, ausgewählt aus:
○ Copolyamiden, die sich aus der Kondensation von mindestens zwei alpha,omega-Aminocarbonsäuren oder mindestens zwei Lactamen mit 6 bis 12 Kohlenstoffatomen oder eines Lactams und einer Aminocarbonsäure, die nicht die gleiche Zahl von Kohlenstoffatomen aufweisen, gegebenenfalls in Gegenwart eines Kettenabbruchmittels, ergeben,
○ Copolyamiden, die sich aus der Kondensation von mindestens einer alpha,omega-Aminocarbonsäure oder eines Lactams, mindestens eines Diamins und mindestens einer Dicarbonsäure ergeben, und
○ Copolyamiden, bei denen es sich um eine Mischung von an 6 reichem Copolyamid 6/12 und an 12 reichem Copolyamid 6/12 handelt.

2. Verwendung nach Anspruch 1, wobei zwischen der Innenschicht und der Außenschicht weitere Schichten angeordnet sind.

3. Verwendung nach Anspruch 1 oder 2, wobei das Material der Innenschicht aus Mischungen von Polyamid und Polyolefin mit Polyamid-Matrix, Copolymeren mit Polyamidblöcken und Polyetherblöcken und Mischungen von Polyamiden und Copolymeren mit Polyamidblöcken und Polyetherblöcken ausgewählt ist.

4. Verwendung nach einem der vorhergehenden Ansprüche, wobei die Außenschicht aus PA 11 oder PA 12 besteht.

5. Mehrschichtschlauch für Druckluft, der aus mehreren Schichten aus Polyamid und Mischungen auf Basis von Polyamid besteht und Folgendes umfasst:
- eine mit der Druckluft in Berührung stehende Innenschicht aus Polyamid, das aus PA 11, PA 12, aliphatischen Polyamiden, die sich aus der Kondensation eines aliphatischen Diamins mit 6 bis 12 Kohlenstoffatomen und einer aliphatischen Disäure mit 9 bis 12 Kohlenstoffatomen ergeben, und Copolyamiden 11/12 mit entweder mehr als 90% 11-Einheiten oder mehr als 90% 12-Einheiten ausgewählt ist,
- eine Außenschicht aus Polyamid, das aus PA 11, PA 12, aliphatischen Polyamiden, die sich aus der Kondensation eines aliphatischen Diamins mit 6 bis 12 Kohlenstoffatomen und einer aliphatischen Disäure mit 9 bis 12 Kohlenstoffatomen ergeben, und Copolyamiden 11/12 mit entweder mehr als 90% 11-Einheiten oder mehr als 90% 12-Einheiten ausgewählt ist,
- mindestens eine zwischen der Innenschicht und der Außenschicht angeordnete Zwischenschicht, die aus Mischungen von Polyamid und Polyolefin mit Polyamid-Matrix, Copolymeren mit Polyamidblöcken und Polyetherblöcken und Mischungen von Polyamiden und Copolymeren mit Polyamidblöcken und Polyetherblöcken ausgewählt ist, und
- mindestens eine zwischen der Innenschicht und der Zwischenschicht angeordnete Bindemittelschicht aus Copolyamid.

6. Schlauch nach Anspruch 5, wobei das Material der Innen- und Außenschicht aus PA 11 und PA 12 ausgewählt ist.

7. Verwendung nach Anspruch 3 oder Schlauch nach Anspruch 5, wobei in der Mischung von Polyamid und Polyolefin mit Polyamid-Matrix das Polyolefin (i) ein Polyethylen hoher Dichte (HDPE) und (ii) eine Mischung aus einem Polyethylen (C1) und einem Polymer (C2), das aus Elastomeren, Polyethylenen sehr niedriger Dichte und Ethylen-Copolymeren ausgewählt ist, wobei die Mischung (C1) + (C2) mit einer ungesättigten Carbonsäure cogepfropft ist, umfasst.

8. Verwendung nach Anspruch 3 oder Schlauch nach Anspruch 5, wobei in der Mischung von Polyamid und Polyolefin mit Polyamid-Matrix das Polyolefin (i) ein Polyethylen hoher Dichte (HDPE), (ii) ein Polymer (C2), das aus Elastomeren, Polyethylenen sehr niedriger Dichte und Ethylen-Copolymeren ausgewählt ist, wobei (C2) mit einer ungesättigten Carbonsäure gepfropft ist, und (iii) ein Polymer (C'2), das aus Elastomeren, Polyethylenen sehr niedriger Dichte und Ethylen-Copolymeren ausgewählt ist, umfasst.

9. Verwendung nach Anspruch 3 oder Schlauch nach Anspruch 5, wobei in der Mischung von Polyamid und Polyolefin mit Polyamid-Matrix das Polyolefin (i) Polypropylen und (ii) ein Polyolefin, das sich aus der Umsetzung eines Polyamids (C4) mit einem Copolymer (C3), das Propylen und ein gepfropftes oder copolymerisiertes ungesättigtes Monomer X enthält, ergibt, umfasst.

10. Verwendung nach Anspruch 3 oder Schlauch nach Anspruch 5, wobei in der Mischung von Polyamid und Polyolefin mit Polyamid-Matrix das Polyolefin (i) ein Polyethylen vom EVA-, LLDPE-, VLDPE- oder Metallocen-Typ und (ii) ein Ethylen-Alkyl(meth)-acrylat-Maleinsäureanhydrid-Copolymer umfasst.

11. Verwendung nach Anspruch 3 oder Schlauch nach Anspruch 5, wobei in der Mischung von Polyamid und Polyolefin mit Polyamid-Matrix das Polyolefin zwei funktionalisierte Polymere, die mindestens 50 mol-% Ethylen-Einheiten enthalten und zu einer vernetzten Phase reagieren können, umfasst.

12. Verwendung nach Anspruch 3 oder Schlauch nach Anspruch 5, wobei in der Mischung von Polyamid und Polyolefin mit Polyamid-Matrix das Polyamid aus Mischungen von (i) Polyamid und (ii) Copolymer mit PA-6-Blöcken und PTMG-Blöcken und Mischungen von (i) Polyamid und (ii) Copolymer mit PA-12-Blöcken und PTMG-Blöcken ausgewählt ist; wobei das Mengenverhältnis von Copolymer und Polyamid, bezogen auf das Gewicht, zwischen 10/90 und 60/40 liegt.

13. Verwendung eines Mehrschichtschlauchs nach einem der Ansprüche 5 bis 6 zur Zufuhr von Druckluft zu Geräten, Werkzeugmaschinen, verschiedenen Vorrichtungen und auch für Bremskreise von Hochleistungsfahrzeugen.

## Claims

1. Use of a multilayer flexible hose for supplying compressed air to equipment, machine tools, various devices and for the braking circuits of high-powered vehicles, the said hose consisting of several layers of polyamide and of polyamide-based blends and comprising:
• an internal layer, in contact with the compressed air, chosen from polyamides, blends of polyamide and polyolefin having a polyamide matrix, copolymers comprising polyamide blocks and polyether blocks, and blends of polyamides and copolymers comprising polyamide blocks and polyether blocks,
• an external layer made of polyamide chosen from PA 11, PA 12, aliphatic polyamides resulting from the condensation of an aliphatic diamine having from 6 to 12 carbon atoms and of an aliphatic diacid having from 9 to 12 carbon atoms, and copolyamides 11/12 having either more than 90% of 11 units or more than 90% of 12 units, and
• a tie layer made of copolyamide positioned between the internal layer and the external layer, originating from the condensation of α,ω-aminocarboxylic acids, of lactams or of dicarboxylic acids and diamines chosen from:
○ the copolyamides resulting form the condensation of at least two α,ω-aminocarboxylic acids or of at least two lactams having from 6 to 12 carbon atoms or of a lactam and of an aminocarboxylic acid not having the same number of carbon atoms, in the optional presence of a chain-limiting agent,
○ the copolyamides resulting from the condensation of at least one α,ω-aminocarboxylic or of one lactam, at least one diamine and at least one dicarboxylic acid, and
○ the copolyamides which are a blend of a copolyamide 6/12 rich in 6 and of a copolyamide 6/12 rich in 12.

2. Use according to Claim 1, in which other layers are positioned between the internal layer and the external layer.

3. Use according to Claim 1 or 2, in which the material of the internal layer is chosen from blends of polyamide and polyolefin having a polyamide matrix, copolymers comprising polyamide blocks and polyether blocks, and blends of polyamides and copolymers comprising polyamide blocks and polyether blocks.

4. Use according to any one of the preceding claims, in which the external layer is made of PA 11 or of PA 12.

5. Multilayer flexible hose for compressed air consisting of several layers of polyamide and of polyamide-based blends and comprising:
- an internal layer, in contact with the compressed air, made of polyamide chosen from PA 11, PA 12, aliphatic polyamides resulting from the condensation of an aliphatic diamine having from 6 to 12 carbon atoms and of an aliphatic diacid having from 9 to 12 carbon atoms, and copolyamides 11/12 having either more than 90% of 11 units or more than 90% of 12 units,
- an external layer made of polyamide chosen from PA 11, PA 12, aliphatic polyamides resulting from the condensation of an aliphatic diamine having from 6 to 12 carbon atoms and of an aliphatic diacid having from 9 to 12 carbon atoms, and copolyamides 11/12 having either more than 90% of 11 units or more than 90% of 12 units,
- at least one intermediate layer, positioned between the internal layer and the external layer, chosen from blends of polyamide and polyolefin having a polyamide matrix, copolymers comprising polyamide blocks and polyether blocks, and blends of polyamides and copolymers comprising polyamide blocks and polyether blocks, and
- at least one tie layer made of copolyamide positioned between the internal layer and the intermediate layer.

6. Hose according to Claim 5, in which the material of the internal and external layers is chosen from PA 11 and PA 12.

7. Use according to Claim 3 or hose according to Claim 5, in which, in the blend of polyamide and polyolefin having a polyamide matrix, the polyolefin comprises (i) a high-density polyethylene (HDPE) and (ii) a blend of a polyethylene (C1) and a polymer (C2) chosen from the elastomers, very low density polyethylenes and ethylene copolymers, the blend (C1) + (C2) being cografted with an unsaturated carboxylic acid.

8. Use according to Claim 3 or hose according to Claim 5, in which, in the blend of polyamide and polyolefin having a polyamide matrix, the polyolefin comprises (i) a high density polyethylene (HDPE), (ii) a polymer (C2) chosen from elastomers, very low density polyethylenes and ethylene copolymers, (C2) being grafted with an unsaturated carboxylic acid, and (iii) a polymer (C'2) chosen from elastomers, very low density polyethylenes and ethylene copolymers.

9. Use according to Claim 3 or hose according to Claim 5, in which, in the blend of polyamide and polyolefin having a polyamide matrix, the polyolefin comprises (i) polypropylene and (ii) a polyolefin which results from the reaction of a polyamide (C4) with a copolymer (C3) comprising propylene and an unsaturated monomer X which is grafted or copolymerized.

10. Use according to Claim 3 or hose according to Claim 5, in which, in the blend of polyamide and polyolefin having a polyamide matrix, the polyolefin comprises (i) a polyethylene of EVA, LLDPE, VLDPE or metallocene type and (ii) an ethylene/alkyl (meth)acrylate/maleic anhydride copolymer.

11. Use according to Claim 3 or hose according to Claim 5, in which, in the blend of polyamide and polyolefin having a polyamide matrix, the polyolefin comprises two functionalized polymers which comprise at least 50 mol% of ethylene units and which can react to form a crosslinked phase.

12. Use according to Claim 3 or hose according to Claim 5, in which, in the blend of polyamide and polyolefin having a polyamide matrix, the polyamide is chosen from blends of (i) polyamide and (ii) copolymer comprising PA 6 blocks and PTMG blocks and blends of (i) polyamide and (ii) copolymer comprising PA 12 blocks and PTMG blocks; the ratio by weight of the amount of copolymer to the amount of polyamide being between 10/90 and 60/40.

13. Use of a multilayer flexible hose according to either one of Claims 5 and 6 for supplying compressed air to equipment, machine tools, various devices and for the braking circuits of high-powered vehicles.
